# EUROPEAN PATENT SPECIFICATION

(11) **EP 0 723 632 B1**
(45) Date of publication and mention of the grant of the patent: **04.10.2001**
(21) Application number: 95903475.2
(22) Date of filing: 23.11.1994
(51) Int. Cl.: F16C 29/02, F16C 27/02

(54) **CRAN JIB WITH GUIDE WASHER**
KRANAUSLEGER MIT FÜHRUNGSSCHEIBE
BRAS DE GRUE AVEC RONDELLE DE GUIDAGE

(30) Priority: 10.12.1993 SE 9304110
(43) Date of publication of application: 31.07.1996
(73) Proprietor: HIAB AB, S-824 83 Hudiksvall (SE)
(72) Inventor: SANDBERG, Dan, S-824 93 Hudiksvall (SE)
(74) Representative: Johansson, Lars E.
(86) International application number: SE9401116
(87) International publication number: WO9516145

(56) References cited:
- CH-A- 341 362
- DE-A- 1 400 282
- FR-A- 2 307 175
- US-A- 3 445 143
- US-A- 4 986 674

## Description

### Technical field of the invention

This invention relates to a crane jib including two box girders which are telescopically movable relative to each other and comprise wear members guiding the same during displacement.

### Background and prior art of the invention

Box girders in telescopic crane jibs have the same cross-sectional shape, although different sizes so that one girder can be inserted in the next one, and so on. In practice the cross-sectional shape of the girders may be rectangular or, preferably, hexagonal, the girders in the latter case including upper and lower V-shaped or angled pairs of flanges between which vertical side flanges extend. Such crane jib girders should be capable of being displaced relative to each other not only with a minimum of friction but also with a minimum of play between the members. In other words the girders should, when the jib is extended or shortened, be capable of moving as linearly as possible relative to each other without rattling. The girders of previously known cranes are provided with special wear plates of nylon or similar material having a low coefficient of friction. More specifically, at least one nylon plate or a pair of nylon plates have, as a minimum, been fixed by gluing at the top of and externally on the rear end of each interior box girder, as well as at least one plate or a pair of plates at the bottom and internally of the front end of each external box girder. Thanks to the low coefficient of friction of the nylon material these wear plates certainly facilitate the sliding between the girders, but they do not provide any positive lateral guidance. With girders of hexagonal cross-section there is per se a certain lateral guiding of the girders, inasmuch as the nylon plates in this case are arranged in pairs on the angled flanges, but this lateral guiding may at best be maintained only as long as the plates are fresh and unworn. A particular problem is the fact that the box girders in practical production seldom or never can be manufactured with absolute accuracy, i.e. with absolute nominal measures along the entire girder length. The hexagonal type of girder is usually manufactured by bending a metal plate about five lines and welding the free edges after bringing them together. During such manufacture the size tolerance in different axial sections may vary by as much as up to about 2 mm. This means that the lateral play between the inside of each external girder and the outside of an internal girder may amount to several millimetres. As long as the crane jib is used in a loaded condition this play does not cause any great problems, since the front and rear pairs of nylon plates are, in this condition, capable of also guiding the girders laterally. But as soon as the crane becomes unloaded the girders may lose all positive lateral guidance, allowing them to move rather freely in relation to each other and give rise to a rattling noise which is now and then very annoying.

By US 3 719 403 it is previously known to provide telescoping box girders of a crane jib according to the preamble of claim 1 with resilient slide or wear plates instead of the fixed nylon plates attached by gluing. These resilient plates are each constituted by a square metal plate, one side of which is intended to bear against either the outside of an internal box girder or the inside of an external box girder, and the opposite side of which bears against a spring mounted in a retainer. In one embodiment said spring is a Belleville-spring and in another alternative embodiment the spring consists of a leaf spring bent to a special shape. Though these spring plates solve the problem of the uneven wearing that usually comes up in connection with fixed wear plates, these plates act in the same manner as the fixed nylon plates in so far as they are located on the upper side and the under side of each internal box girder without giving any lateral guidance whatsoever, i.e. between the side flanges of the girders. In comparison with the nylon places this solution of the problem is expensive to realize in practical production, since it not only calls for a plate as well as a spring but also a special retainer for the spring.

US 3 445 143 disloses a puck-like washer made of plastics material, such as nylon, which in addition to a circumferential portion has a central portion confined therein, said central portion being arranged to bear with low friction against one of two reciprocally movable members. In this case the central portion of the washer is, however, comparatively thin and arranged to bear against a fixed support in the form of a head of a bolt. The plastic washer is, together with the bolt head, inserted in a guide rail of C-shaped cross section, the primary task of the washer being to reduce the friction between the bolt head and the rail. The central portion of the washer has, however, no scope to yield in the space between the bolt head and the rail, and therefore it would never be capable of accomodating to varying clearance.

FR 2 307 175 discloses a washer-like construction having an annular, yielding flange between a central portion and a circumferential portion. This washer is, however, included in a shock absorber and its purpose is not to provide guidance between two box girders being displacable or movable by translation in relation to each other. What is more, this washer has no central core portion at all in as much as an aperture is recessed in the centre thereof.

### Objects and features of the invention

The present invention aims to overcome the above mentioned disadvantages and provide a simple and inexpensive solution of the problem with deficient guiding of two box girders of a crane jib whose relative movement gives rise to rattles. Therefore, a primary object of the invention is to provide a crane jib including one or more washers serving as guiding elements, which are simple and cheap to produce and which easily lend thenselves to being fitted as a complement to existing slide or wear plates in crane jibs of the type described. The washer should secure an efficient lateral guidance of the various box girders or profiles of the jib, even when those are manufactured with low dimensional accuracy. Furthermore the washer should not give rise to significant frictional resistance. In other words the washer should be capable of sliding easily and without substantial friction along the box girder against which it bears.

According to the invention at least the primary object thereof is achieved by means of the features defined in the characterizing part of claim 1. Preferred embodiments of the invention are furthermore defined in the dependent claims.

### Brief description of the attached drawing

In the drawing:
- Fig 1: is a partially sectioned perspective view of a guide washer according to the invention,
- Fig 2: is a cross sectional view through the washer in an unloaded condition,
- Fig 3: is a similar sectional view showing the same washer mounted on one of two box girders being movable relative to each other, the washer being illustrated in a moderately loaded condition,
- Fig 4: is a corresponding sectional view showing the washer in a condition of maximum load in which the core portion of the washer is completely impressed, and
- Fig 5: is a sectional view corresponding to Fig 2, but having dimensional indicators.

### Detailed description of a preferred embodiment of the invention

In the drawing reference numeral 1 generally designates a guide washer according to the invention. This washer is mounted on one of two members 2, 3 being reciprocally movable relative to each other. One member 2 presents a circular, drilled hole or aperture 4 serving as a seat for the washer 1. The members 2, 3, which are movable relative to each other in the direction of the double-arrow A, are portions of metal plates or flanges included in the box girders of a crane jib.

The washer 1 consists of a body which is form-pressed or moulded in one piece of plastics material, the body including a cylindrical collar 5 and a flange 6 projecting radially outwardly therefrom. Spanning the collar 5, at the flange end, a disc has a central, thick core portion 7 and an annular transition portion 8 intermediate the core portion and the collar. This disc or central portion has a generally frustroconical shape, with the core portion 7 outwardly confined by a substantially circular plane surface 9 which, at the circumferential circular edge thereof, develops into a conical surface 10 forming the external surface of the annular transition portion 8. The opposite surface 11, inside the core portion 7 and the annular portion 8, is substantially plane and merges at its periphery into the collar 5 by a smoothly rounded transition surface 12. In practice the flange 6 is preferably continuous around the entire periphery of the collar, and its external and internal surfaces 13, 13' are parallel. The thickness of the core portion 7 is at least twice the thickness of the flange 6. In a strain-free condition the core portion projects proud of the surface 13 of the flange 6 a distance which is at least equal to the thickness of the flange. The outer diameter of the collar 5 should be about equal to the diameter of the seat-forming aperture 4 in the member 2.

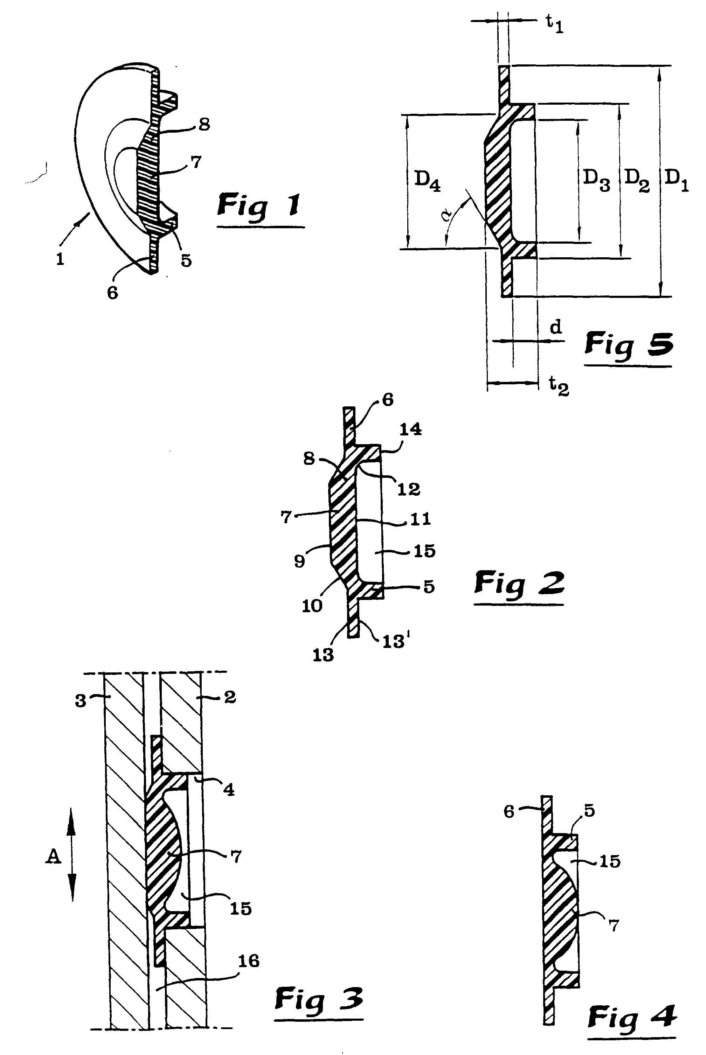

With reference to Fig 5, an actual size of a prototype washer is indicated. The outer diameter D₁ of the flange 6 is 45 mm and the outer diameter D₂ of collar 5 is 30 mm. The inner diameter D₃ of the collar is 24 mm, so that the wall thickness of the collar is 3 mm. The outer diameter D₄ of the central disc of the washer is 26 mm. The cone angle α for the conical surface 8 can be within the range of 50 to 70° or suitably about 60°. The flange thickness t₁ is 2 mm, and the depth d of the collar 5 is 5 mm. The total thickness t₂ of the body, i.e. the axial distance between the surface 9 and the annular inner edge surface 14 of the collar, is 10 mm, so that the distance by which the core portion 7 projects outwardly from the outer surface 13 of the flange 6 is 3 mm. The radius of the internal transition surface 12 is 2 mm.

The washer described operates in the following manner. In a strain-free condition the washer is mounted in aperture 4. In practice the washer may be loosely mounted in the aperture, or possibly with a certain press-fit. Alternatively, it is also possible to attach the washer by means of a light glue joint, using a dab of glue or adhesive. In the next step box girders 2, 3 are brought into cooperation with each other, more specifically by inserting box girder 2 into box girder 3. Depending on the clearance existing between those box girders, the core portion 7 of the washer will at least slightly be impressed into the free space 15 within the collar 5, as illustrated in fig 3, where the clearance between the girders 2, 3 is designated 16. This clearance may vary quite considerably along the axial length of the girders (i.e. in the direction of arrow A) depending on the actual tolerances in manufacture, although the clearance is always at least equal to the thickness of the flange 6. When the girders 2, 3 are thereafter displaced reciprocally relative to each other in the direction of arrow A the core portion 7 of the washer will be impressed into the space 15 to a varying degree depending on the momentary actual clearance between said girders. In other words the outside surface 9 of the core portion 7 will always be kept urged against girder 3 while providing a resilient guiding of girders 2, 3 relative to each other. In an extreme position in which the clearance 16 approaches the thickness of the flange 6 the core portion 7 of the washer will be completely impressed into space 15, as illustrated in fig 4.

As the plastics material of the washer 1, polyurethane may advantageously be used.

The advantages of the invention are as follows. The simple washer can be cheaply mass produced. It enables two reciprocally movable box girders of a crane jib to be mutually guided in a manner which accomodates to varying clearance. The washer can be mounted in a simple and safe manner merely by drilling a hole in the box girder in question. The material of the washer has a rather low coefficient of friction and so the girders will be movable relative to each other without substantial frictional resistance. In addition the washer is easy to replace after wearing.

### Conceivible modifications of the invention

The invention is not limited merely to the embodiment described above and shown in the drawing. Thus, it is, for example, possible to have instead of the continous flange 6 a number of tabs spaced apart by gaps. In such a way material will be spared. Furthermore the geometrical shape of the core portion 7 the tapering transition portion 8 may differ. Naturally the specific dimensions given in connection with Fig 5 should be seen merely as examples.

## Claims

1. Crane jib including two box girders (2, 3) which are telescopically movable relative to each other and comprise wear members (1) guiding the same during displacement, **characterized in that** the individual wear member consists of a washer (1) of plastics material having a substantially cylindrical collar (5) seating in an aperture (4) in a first one of said box girders (2, 3) of substantially the same diameter as the outer diameter of said collar (5), said washer further having a central portion, confined by said collar, adapted to bear against a surface of a second one of said box girders, and a radial projection (6) at one end of the collar bearing against a surface of said first box girder around said aperture (14) and **in that** said central portion has a comparatively thick core portion (7), which, in a strain-free condition, projects proud of the radial projection, away from one end of the collar, as well as an annular transition portion (8) extending between the core portion (7) and the collar (5), the thickness of said transition portion decreasing radially from said core portion towards said collar, so as to make the annular transition portion resilient in order to allow varying impression of the core portion into the empty space surrounded by the collar and to always keep the core portion urged against said surface of said second box girder.

2. Crane jib according to claim 1, **characterized in that** the thickness of the core portion (7) is at least twice the thickness of the radial projection (6), said core portion projecting, in the strain free condition, proud of the radial projection a distance which is at least equal to the thickness of the radial projection.

3. Crane jib according to claim 1 or 2, **characterized in that** the central portion of the washer body is substantially frustroconical, the external surface (10) of the annular transition portion (8) being conical and the external surface (9) of the core portion being substantially planar and circular.

## Patentansprüche

1. Kranausleger mit zwei Kastenträgern (2, 3), die relativ zueinander teleskopierbar beweglich sind und Verschleißelemente (1) aufweisen, die sie während der Verschiebung führen, **dadurch gekennzeichnet, dass** jedes Verschleißelement aus einer Unterlegscheibe (1) aus Kunststoffmaterial besteht und einen im wesentlichen zylindrischen Kragen (5) aufweist, der in einem Durchbruch (4) in einem ersten der Kastenträger (2, 3) zum Sitzen kommt, der im wesentlichen denselben Durchmesser wie der Außendurchmesser des Kragens (5) aufweist, wobei die Unterlegscheibe außerdem einen zentralen Abschnitt aufweist, der durch den Kragen begrenzt und dazu ausgelegt ist, gegen eine Fläche von einem zweiten der Kastenträger anzuliegen, und **dass** ein radialer Abschnitt (6) an einem Ende des Kragens gegen eine Fläche des ersten Kastenträgers um die Öffnung (14) herum anliegt, und **dass** der zentrale Abschnitt einen vergleichsweise dicken Kernabschnitt (7) aufweist, der in spannungsfreiem Zustand von dem Kernabschnitt entfernt von einem Ende des Kragens vorragend vorsteht, und einen ringförmigen Übergangsabschnitt (8), der sich zwischen dem Kernabschnitt (7) und dem Kragen erstreckt, wobei die Dicke des Übergangsabschnitts ausgehend von dem Kernabschnitt in Richtung auf den Kragen radial abnimmt, um dem ringförmigen Übergangsabschnitt Elastizität zu verleihen, um ein variierendes Drücken des Kernabschnitts in den leeren Raum zu ermöglichen, der durch den Kragen umgeben ist, und um den Kernabschnitt stets gegen die Fläche des zweiten Kastenträgers zu drücken.

2. Kranausleger nach Anspruch 1, **dadurch gekennzeichnet, dass** die Dicke des Kernabschnitts (7) zumindest doppelt so groß ist wie die Dicke des radialen Vorsprungs (6), wobei der Kernabschnitt im spannungsfreien Zustand aus dem radialen Vorsprung um eine vorragende Distanz vorsteht, die zumindest gleich der Dicke des radialen Vorsprungs ist.

3. Kranausleger nach Anspruch 1 oder 2, **dadurch gekennzeichnet, dass** der zentrale Abschnitt des Unterlegscheibenkörpers im wesentlichen kegelstumpfförmig ist, **dass** die Außenseite (10) des ringförmigen Übergangsabschnitts (10) konisch ist und **dass** die Außenfläche (9) des Kernabschnitts im wesentlichen planar und kreisförmig ist.

## Revendications

1. Flèche comprenant deux poutres en caisson (2, 3) qui sont mobiles télescopiquement par rapport les unes aux autres et comprennent des membres (1) d'usage guidant lesdites durant déplacement, **caractérisée par** le membre d'usage individuel est composé d'une plaque (1) de matériaux plastiques ayant un collet (5) essentiellement cylindrique assis dans une ouverture (4) dans une première desdites poutres en caisson (2, 3) d'essentiellement le même diamètre que le diamètre extérieur dudit collet (5), ladite plaque de plus ayant d'une part une portion centrale, confinée par ledit collet, adaptée à porter sur une surface d'une deuxième desdites poutres en caisson, et une projecture (6) radiale à une extrémité du collet portant sur une surface desdites première poutre en caisson autour de ladite ouverture (14), et par ladite portion centrale a une portion (7) de noyau comparativement grosse, qui, dans un état exempt de tension, projette de la projecture radiale, loin d'une extrémité du collet, d'autre part une portion (8) de transition annulaire s'étendant entre la portion (7) de noyau et le collet (5), l'épaisseur de ladite portion de transition diminuant en sens radial de ladite portion de noyau vers ledit collet, afin de faire la portion annulaire de transition élastique pour rendre possible une impression variée de la portion de noyau dans l'espace vide entouré par le collet et pour toujours garder la portion de noyau pressée contre ladite surface de ladite deuxième poutre en caisson.

2. Flèche selon la revendication 1, **caractérisée par** l'épaisseur de la portion (7) de noyau est au moins la double de l'épaisseur de la projecture (6) radiale, ladite portion de noyau projetant, dans état exempt de tension, de la projecture radiale une distance qui est au moins pareil à l'épaisseur de la projecture radiale.

3. Flèche selon la revendication 1 ou 2, **caractérisée par** la portion centrale du membre de plaque est essentiellement conique tronqué, la surface (10) extérieure de la portion de transition (8) annulaire étant conique et la surface (9) extérieure de la portion de noyau étant essentiellement plane et circulaire.
